# EUROPÄISCHE PATENTSCHRIFT

(11) **EP 4 072 911 B1**
(45) Veröffentlichungstag und Bekanntmachung des Hinweises auf die Patenterteilung: **31.07.2024**
(21) Anmeldenummer: 20820050.1
(22) Anmeldetag: 24.11.2020
(51) Int. Cl.: B60T 1/087, B60T 10/02, F16D 57/04

(54) **RETARDEREINHEIT MIT WÄRMETAUSCHER**
RETARDER UNIT WITH HEAT EXCHANGER
UNITÉ DE RETARDER AVEC ÉCHANGEUR DE CHALEUR

(30) Priorität: 12.12.2019 DE 102019134062
(43) Veröffentlichungstag der Anmeldung: 19.10.2022
(73) Patentinhaber: Voith Patent GmbH, 89522 Heidenheim (DE)
(72) Erfinder: LAUKEMANN, Dieter, 74586 Frankenhardt (DE); SCHREIBER, Alexander, 74564 Crailsheim (DE)
(86) Internationale Anmeldenummer: PCT/EP2020/083175
(87) Internationale Veröffentlichungsnummer: WO 2021/115776

(56) Entgegenhaltungen:
- CN-A- 109 253 188

## Beschreibung

Die vorliegende Erfindung bezieht sich auf einen hydrodynamischen Retarder, insbesondere einem Ölretarder, mit angebautem Wärmetauscher für ein Kraftfahrzeug.

Kraftfahrzeuge wie LKW oder Busse sind zum großen Teil mit einem Retarder, also einer zusätzlichen Dauerbremseinrichtung, ausgestattet, um einen Verschleiß an den gewöhnlichen Radbremsen des Fahrzeugs zu verringern. Eine derartige zusätzliche Bremse kann ein Primär- oder Sekundärretarder sein. In beiden Ausführungen ist der Rotor des Retarders mit dem Antriebsstrang gekoppelt oder koppelbar. Weiterhin ist eine Vorrichtung vorhanden, mittels der der Retarder für den Bremsbetrieb mit einem Arbeitsmedium befüllbar ist. Bei befülltem Arbeitsraum und drehendem Rotor wirkt ein Bremsmoment auf den Rotor.

Das hydraulische Schema für einen derartigen Retarder ist beispielsweise aus der DE 10 2013 006 611 A1 bekannt. Der hier offenbarte Retarder verwendet ein Öl als Arbeitsmedium, das in einem im Wesentlichen geschlossenen Kreislauf bereitgestellt wird. In dem Kreislauf ist die Primärseite eines Wärmetauschers eingebunden, der zur Abführung der Retarderabwärme genutzt wird, wenn der Retarder in den Bremsbetrieb geschaltet wird. Die Sekundärseite des Wärmetauschers ist an den Fahrzeugkühlkreislauf angeschlossen, über den auch der Verbrennungsmotor des Kraftfahrzeugs gekühlt wird.

Aus der DE 10 2014 215 861 A1 ist die übliche Anordnung eines Sekundär-Retarders zu entnehmen. Der direkt am Retarder montierte Wärmetauscher ist primärseitig mit den Arbeitsmediumkreislauf, Ölkreislauf, und sekundärseitig mit dem Kühlwasserkreislauf des Kraftfahrzeugs fluidführend verbunden.

Der Wärmetauscher ist typischer Weise an einer Anschraubfläche oder Koppelebene an dem Retarder angeschraubt. In der Koppelebene liegen die Ölkanäle, die Teil des Ölkreislaufs sind und den Retarder mit dem Wärmetauscher fluidleitend verbinden.

Der Wärmetauscher ist auf der Sekundärseite über Wasserstutzen am Wärmetauscher angeschlossen. Auf Grund des beschränkten Bauraums in den meisten Kraftfahrzeugen gibt es bei manchen Anwendungen Probleme mit der Rohr- oder Schlauchführung vom Kühlkreislauf zum Wärmetauscher. Dies führt zu einem erheblichen Mehraufwand bei der Planung und Umsetzung, um den Retarder mit dem Wärmetauscher im Fahrzeug zu implementieren.

Aus der CN108 533 643 A ist ein Retarder mit Wärmetauscher bekannt, bei dem die Wasserstutzen seitlich am Wärmetauscher angebracht sind. Weiterhin sind am Retardergehäuse Ausbuchtungen vorgesehen, die eine Kühlwasserkanalführung am Retardergehäuse vorbei erleichtern.

Weiterhin ist aus der CN 109 253 188 A ein Retarder mit Wärmetauscher bekannt. Der Anschluss des Wärmetauschers an den Kühlwasserkreislauf sowie an den Ölkreislauf (Anschluss primärseitig und sekundärseitig) erfolgt und über eine Koppelebene.

Eine der Aufgaben der Erfindung ist es, eine Retardereinheit mit angebautem Wärmetauscher vorzuschlagen, der eine Verbesserung zum StdT darstellt.

Die Aufgabe wird durch die Retardereinheit mit den Merkmalen gemäß Anspruch 1 gelöst. Weitere vorteilhafte Merkmale sind in den abhängigen Ansprüchen genannt.

Es wird eine Retardereinheit für ein Kraftfahrzeug vorgeschlagen, die besonders kompakt aufgebaut ist. Die Retardereinheit umfasst einen hydrodynamischen Retarder, aufweisend ein Retardergehäuse welches aus einem Rotorgehäuseteil, einem Statorgehäuseteil und einem Gehäusedeckel zusammengesetzt ist. In das Retardergehäuse, also in dem Rotorgehäuseteil, dem Statorgehäuseteil und dem Gehäusedeckel, sind Ölkanäle integriert. Weiterhin umfasst die Retardereinheit einen Wärmetauscher. Am Retardergehäuse ist eine Koppelebene vorgesehen, über die die Primärseite des Wärmetauschers fluidleitend mit den Ölkanälen verbindbar ist, wobei der Wärmetauscher direkt an dem Retardergehäuse befestigt ist.

Erfindungsgemäß wird vorgeschlagen, dass die fluidleitende Verbindung der Sekundärseite des Wärmetauschers mit einem Kühlkreislauf des Kraftfahrzeugs über die Koppelebene erfolgt. Durch die direkte Koppelung aller fluidleitenden Verbindungen zwischen Retarder und Wärmetauscher über die Koppelebene am Retardergehäuse wird der Aufbau wesentlich vereinfacht und die Schlauchstutzen am Wärmetauscher können entfallen, was die Einbauverhältnisse im Bereich des Wärmetauschers verbessert.

Erfindungsgemäß ist zumindest ein Kühlkanalabschnitt vorgesehen, der innerhalb des Retardergehäuses verläuft. Wobei vorzugsweise ein Vorlaufkanal und ein Rücklaufkanal durch das Retardergehäuse verlaufen. Denkbar ist aber auch, dass ein Teilbereich der Koppelebene von einem Flanschbereich am Retardergehäuse gebildet wird. Wobei dann auf der Rückseite des Flanschbereichs ein Schlauchstutzen befestigt ist, über den der Anschluss an den Kühlkreislauf erfolgt. Ein am Schlauchstutzen angeschlossener Schlauch wird in dieser Variante außerhalb des Retardergehäuses vorbeigeführt.

In einer besonders bevorzugten Ausführung sind der Vorlauf- und Rücklaufkanal aber in das Retardergehäuse integrierte, insbesondere eingegossene, Kanäle. Im Sinne der Erfindung ist damit gemeint, dass der Vorlauf- und Rücklaufkanal aus Teilkanalstücken zusammengesetzt ist, die durch das Statorgehäuseteil und/oder den Gehäusedeckel führen.

Vorzugsweise sind Schlauchstutzen vorgesehen über die Vorlauf- und Rücklaufkanal an den Kühlkreislauf anschließbar sind. Wobei am Retardergehäuse Anschlussebenen vorgesehen sind, an die die Schlauchstutzen anschließbar sind.

In der bevorzugten Ausführung sind die Anschlussebenen am Statorgehäuseteil angeordnet und die Koppelebene ist am Gehäusedeckel, senkrecht zur Retarderachse, angeordnet. Dabei können die Anschlussebenen parallel zur Koppelebene angeordnet sein.

Weiterhin weist das Statorgehäuseteil (5) eine Kühlfläche (14) auf, an der ein Steuergerät zur Retardersteuerung befestigt ist. Zur Verbesserung der Kühlung des Steuergerätes wird vorgeschlagen, dass der Vorlaufkanal im Statorgehäuseteil an der Kühlfläche entlang, zwischen Kühlfläche und Stator, verläuft. Weiterhin kann der Rücklaufkanal im Statorgehäuseteil durch einen im Statorgehäuseteil integrierten Ölbehälter verlaufen. Dadurch wird insbesondere erreicht, dass das nach dem Bremsbetrieb in den Ölbehälter geleitete heiße Öl weiter gekühlt wird.

Anhand von Ausführungsbeispielen werden weitere vorteilhafte Merkmale der Erfindung erläutert unter Bezugnahme auf die Zeichnungen.
- Figur 1: Retardereinheit im Schnitt
- Figur 2: Retardereinheit von oben

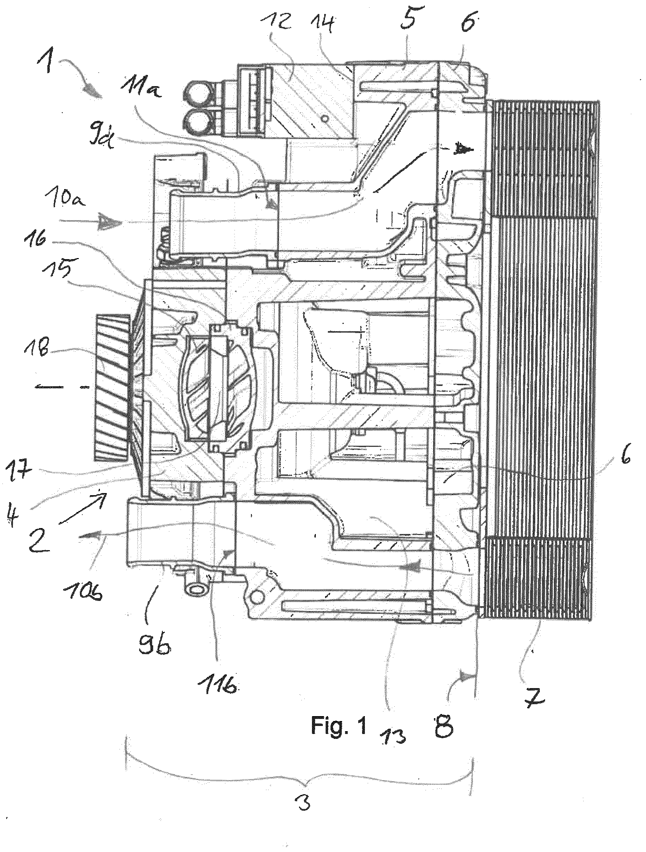

Figur 1 zeigt eine erfindungsgemäße Retardereinheit 1 im Schnitt, so dass der Verlauf des Vor- und Rücklaufkanals 10a, b durch das Statorgehäuseteil 5 und den Gehäusedeckel 6 gut zu erkennen ist. Die Retardereinheit 1 setzt sich zusammen aus dem hydrodynamischen Retarder 2 und dem Wärmetauscher 7.

Dabei setzt sich das Retardergehäuse 3 aus einem Rotorgehäuseteil 4, einem Statorgehäuseteil 5 und einem Gehäusedeckel 6 zusammen. In dem Retardergehäuse ist der, über das Zahnrad 18 antreibbare, Rotor 15 und in dem Statorgehäuseteil ist der drehfest fixierte Stator 16 integriert. Der Arbeitsmediumkreislauf, Ölkreislauf, umfasst unter anderem einige Ölkanäle und einen Ölbehälter 13, in dem das Öl im Nicht-Bremsbetrieb bevorratet wird. Der komplette Aufbau und die Funktion des Arbeitsmediumkreislaufs ist aus dem Stdt hinreichend bekannt, so dass auf eine detaillierte Beschreibung verzichtet wird.

Am Gehäusedeckel 6 des Retardergehäuses 3 ist eine Koppelebene 8 vorgesehen, über die die Primärseite des Wärmetauschers fluidleitend mit den Ölkanälen verbindbar ist, hier im Detail nicht dargestellt, da die Kopplung des Wärmetauscher Primärkreislaufes mit dem Arbeitsmediumkreislauf StdT ist. Die dargestellte fluidleitende Verbindung der Sekundärseite des Wärmetauschers mit dem Vor - bzw. Rücklaufkanal 10a, b, die ebenfalls über die Koppelebene 8 realisiert ist dagegen eine völlig neue Lösung.

Zur Herstellung der fluidleitenden Verbindungen wird der Wärmetauscher 7 auf die Koppelebene 8 des Gehäusedeckels 6 geschraubt, so dass die entsprechenden Kanäle im Gehäusedeckel 6 und dem Wärmetauscher 7 zueinander fluchten bzw. zueinander ausgerichtet sind. Zur Abdichtung kann ein Dichtelement, z.B. O-Ring, verwendet werden.

Der Vorlaufkanal 10a und der Rücklaufkanal 10b verlaufen durch das Retardergehäuse 3 bzw. durch das Statorgehäuseteil 5 und den Gehäusedeckel 6 und sind in die Bauteile eingegossen. Alternativ könnten aber auch Rohrleitungsabschnitte innerhalb des Gehäuses vorgesehen sein. Am Statorgehäuseteil 5 sind Anschlussebenen 11a, b vorgesehen, an die Schlauchstutzen (9) angeschraubt sind, so dass der Vorlauf- und Rücklaufkanal (10a, b) an den Kühlkreislauf anschließbar ist.

Die Anschlussebenen 11a, b sind parallel zur Koppelebene 8 angeordnet, so dass der Anschluss an den Kühlkreislauf des Kraftfahrzeuges über Schläuche realisiert werden kann, die nicht am Gehäuse des Retarders vorbeigeführt werden müssen.

Diese Ausführung bietet aber noch mehr Vorteile. So ist am Statorgehäuseteil 5 eine Kühlfläche 14 vorgesehen, an der das Steuergerät 12 zur Retardersteuerung befestigt ist. Da der Vorlaufkanal 10a im Statorgehäuseteil 5 zwischen Kühlfläche 14 und Stator 16 verläuft kann so eine gewisse thermische Trennung erreicht werden, die das Steuergerät vor zu hohen Temperaturen während des Bremsvorgangs schützt.

Auch der Verlauf des Rücklaufkanals 10b im Statorgehäuseteil 5, durch den im Statorgehäuseteil 5 integrierten Ölbehälter 13, bietet einen zusätzlichen Vorteil gegenüber dem StdT. Nach dem Bremsbetrieb wird das dann heiße Öl in den Ölbehälter 13 geleitet, so dass keine weitere Kühlung über den Wärmetauscher mehr erfolgen kann. Da weiterhin Kühlwasser durch den Rücklaufkanal 10b strömt, wird das Öl dennoch gekühlt, so dass es vor dem nächsten Bremseinsatz zumindest etwas mehr abgekühlt ist und so mehr Bremsleistung übertragen werden kann.

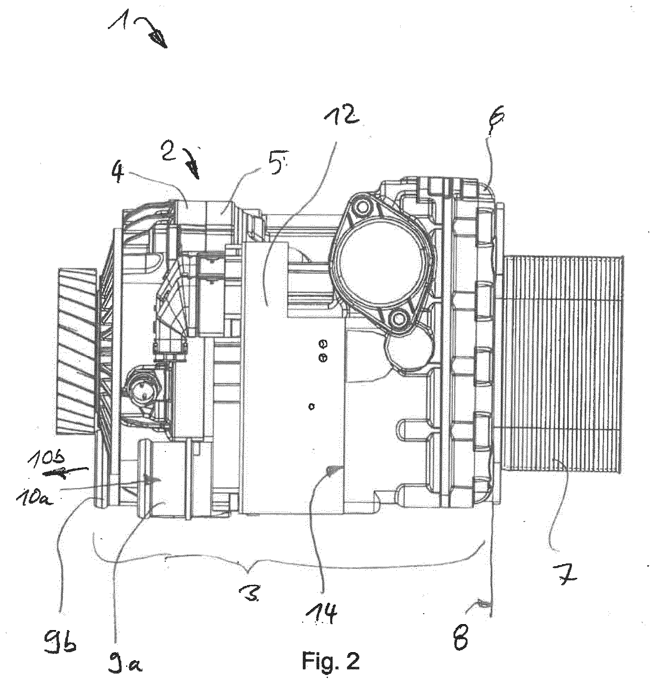

Figur 2 zeigt eine Retarderansicht von oben, aus der die Lage der Schlauchstutzen 9a, b zu entnehmen ist. Weitere Details sind bereits oben beschrieben.

### Bezugszeichenliste

- 1: Retardereinheit
- 2: Retarder
- 3: Retardergehäuse
- 4: Rotorgehäuseteil
- 5: Statorgehäuseteil
- 6: Gehäusedeckel
- 7: Wärmetauscher
- 8: Koppelebene
- 9a, b: Schlauchstutzen
- 10a,: Vorlaufkanal
- 10b: Rücklaufkanal
- 11a, b: Anschlussebenen
- 12: Steuergerät
- 13: Ölbehälter
- 14: Kühlfläche
- 15: Rotor
- 16: Stator
- 17: Arbeitsraum
- 18: Zahnrad

## Patentansprüche

1. Retardereinheit (1) für ein Kraftfahrzeug, umfassend einen hydrodynamischen Retarder (2) aufweisend ein Retardergehäuse (3), zusammengesetzt aus einem Rotorgehäuseteil (4), einem Statorgehäuseteil (5) und einem Gehäusedeckel (6), in das Ölkanäle integriert sind und einen Wärmetauscher (7), wobei am Retardergehäuse (3) eine Koppelebene (8) vorgesehen ist, über die eine Primärseite des Wärmetauschers fluidleitend mit den Ölkanälen (19) verbindbar ist, wobei der Wärmetauscher (7) direkt an dem Retardergehäuse (3) befestigt ist,
wobei die fluidleitende Verbindung einer Sekundärseite des Wärmetauschers (7) mit einem Kühlkreislauf des Kraftfahrzeugs über die Koppelebene (8) erfolgt,
**dadurch gekennzeichnet,**
**dass** zumindest ein Kühlkanalabschnitt (10a, b) zur Koppelung der Sekundärseite des Wärmetauschers (7) mit dem Kühlkreislauf des Kraftfahrzeugs vorgesehen ist, der innerhalb des Retardergehäuses (3) verläuft.

2. Retardereinheit (1) nach Anspruch 1,
**dadurch gekennzeichnet,**
**dass** ein Vorlaufkanal (10a) und ein Rücklaufkanal (10b) durch das Retardergehäuse (3) verlaufen.

3. Retardereinheit nach Anspruch 2,
**dadurch gekennzeichnet,**
**dass** der Vorlauf- und Rücklaufkanal (10a, b) in das Retardergehäuse (3) integrierte, insbesondere eingegossene, Kanäle sind.

4. Retardereinheit nach Anspruch 2 oder 3,
**dadurch gekennzeichnet,**
**dass** am Retardergehäuse (3) Anschlussebenen (11a, b) vorgesehen sind, an die Schlauchstutzen (9) angeschlossen sind, über die der Vorlauf- und Rücklaufkanal (10a, b) an den Kühlkreislauf anschließbar sind.

5. Retardereinheit nach Anspruch 4,
**dadurch gekennzeichnet,**
**dass** die Anschlussebenen (11a, b) am Statorgehäuseteil (5) angeordnet sind und die Koppelebene (8) am Gehäusedeckel (6), senkrecht zur Retarderachse, angeordnet ist.

6. Retardereinheit nach Anspruch 5,
**dadurch gekennzeichnet,**
**dass** die Anschlussebenen (11a, b) parallel zur Koppelebene (8) angeordnet sind.

7. Retardereinheit nach Anspruch 1,
**dadurch gekennzeichnet,**
**dass** das Statorgehäuseteil (5) eine Kühlfläche (14) aufweist, an der ein Steuergerät (12) zur Retardersteuerung befestigt ist.

8. Retardereinheit nach den Ansprüchen 2 und 7,
**dadurch gekennzeichnet,**
**dass** der Vorlaufkanal (10a) im Statorgehäuseteil (5) zwischen Kühlfläche (14) und Stator (16) verläuft und der Rücklaufkanal (10b) im Statorgehäuseteil (5) durch einen im Statorgehäuseteil (5) integrierten Ölbehälter (13) verläuft.

## Claims

1. Retarder unit (1) for a motor vehicle, comprising a hydrodynamic retarder (2) having a retarder housing (3) which is made up of a rotor housing part (4), a stator housing part (5) and a housing cover (6) into which oil ducts are integrated, and a heat exchanger (7), wherein a coupler plane (8), via which a primary side of the heat exchanger can be fluidically connected to the oil ducts (19), is provided on the retarder housing (3), wherein the heat exchanger (7) is fastened directly to the retarder housing (3), wherein the fluidic connection of a secondary side of the heat exchanger (7) to a cooling circuit of the motor vehicle is made via the coupler plane (8), **characterized in that** at least one cooling duct portion (10a, b) is provided for coupling the secondary side of the heat exchanger (7) to the cooling circuit of the motor vehicle and runs within the retarder housing (3).

2. Retarder unit (1) according to Claim 1, **characterized in that** a feed duct (10a) and a return duct (10b) run through the retarder housing (3).

3. Retarder unit according to Claim 2, **characterized in that** the feed and the return duct (10a, b) are ducts which are integrated, in particular integrally cast, into the retarder housing (3).

4. Retarder unit according to Claim 2 or 3, **characterized in that** connection planes (11a, b) are provided on the retarder housing (3), hose connection pieces (9), via which the feed and the return duct (10a, b) can be connected to the cooling circuit, being connected to the connection planes.

5. Retarder unit according to Claim 4, **characterized in that** the connection planes (11a, b) are arranged on the stator housing part (5) and the coupler plane (8) is arranged on the housing cover (6), perpendicularly to the retarder axis.

6. Retarder unit according to Claim 5, **characterized in that** the connection planes (11a, b) are arranged parallel to the coupler plane (8).

7. Retarder unit according to Claim 1, **characterized in that** the stator housing part (5) has a cooling surface (14) to which a controller (12) for retarder control is fastened.

8. Retarder unit according to Claims 2 and 7, **characterized in that** the feed duct (10a) runs in the stator housing part (5) between the cooling surface (14) and the stator (16), and the return duct (10b) runs in the stator housing part (5) through an oil reservoir (13) which is integrated in the stator housing part (5).

## Revendications

1. Unité formant ralentisseur (1) destinée à un véhicule automobile, ladite unité comprenant un ralentisseur hydrodynamique (2) qui comporte un boîtier de ralentisseur (3), pourvu d'une partie de boîtier de rotor (4), d'une partie de boîtier de stator (5) et d'un couvercle de boîtier (6) dans lequel sont intégrés des conduits d'huile, et un échangeur de chaleur (7), un plan d'accouplement (8) étant prévu sur le boîtier de ralentisseur (3) pour établir une liaison fluidique entre un côté primaire de l'échangeur de chaleur et les conduits d'huile (19),
l'échangeur de chaleur (7) étant fixé directement au boîtier de ralentisseur (3),
la liaison fluidique entre un côté secondaire de l'échangeur de chaleur (7) et un circuit de refroidissement du véhicule automobile étant établie par le biais du plan d'accouplement (8),
**caractérisée en ce que**
au moins une portion de conduite de refroidissement (10a, b) est prévue pour accoupler le côté secondaire de l'échangeur thermique (7) au circuit de refroidissement du véhicule automobile qui s'étend à l'intérieur du boîtier de ralentisseur (3).

2. Unité formant ralentisseur (1) selon la revendication 1, **caractérisée en ce qu'**un conduit d'alimentation (10a) et un conduit de retour (10b) s'étendent à travers le boîtier de ralentisseur (3).

3. Unité formant ralentisseur selon la revendication 2, **caractérisée en ce que** les conduits d'alimentation et de retour (10a, b) sont des conduits intégrés, notamment coulés, dans le boîtier de ralentisseur (3).

4. Unité formant ralentisseur selon la revendication 2 ou 3, **caractérisée en ce que** des plans de raccordement (11a, b) sont prévus sur le boîtier de ralentisseur (3), auxquels sont raccordés des raccords de tuyau (9) permettant de raccorder les conduits d'alimentation et de retour (10a, b) au circuit de refroidissement.

5. Unité formant ralentisseur selon la revendication 4, **caractérisée en ce que** les plans de raccordement (11a, b) sont disposés sur la partie de boîtier de stator (5) et le plan d'accouplement (8) est disposé sur le couvercle de boîtier (6), perpendiculairement à l'axe de ralentisseur.

6. Unité formant ralentisseur selon la revendication 5, **caractérisée en ce que** les plans de raccordement (11a, b) sont disposés parallèlement au plan d'accouplement (8).

7. Unité formant ralentisseur selon la revendication 1, **caractérisée en ce que** la partie de boîtier de stator (5) comporte une surface de refroidissement (14) sur laquelle est fixé un dispositif de commande (12) destiné à la commande de ralentisseur.

8. Unité formant ralentisseur selon les revendications 2 et 7, **caractérisée en ce que** le conduit d'alimentation (10a) dans la partie de boîtier de stator (5) s'étend entre la surface de refroidissement (14) et le stator (16) et le conduit de retour (10b) dans la partie de boîtier de stator (5) s'étend à travers un réservoir d'huile (13) intégré dans la partie de boîtier de stator (5).
